# DEMANDE DE BREVET EUROPEEN

(11) **EP 2 253 203 A1**
(43) Date de publication de la demande: **24.11.2010**
(21) Numéro de dépôt: 10305526.5
(22) Date de dépôt: 18.05.2010
(51) Int. Cl.: A01K 7/06, F16L 41/03

(54) **Abreuvoir pour betail à dispositif de raccordement perfectionné**

(30) Priorité: 18.05.2009 FR 0902389
(71) Demandeur: Polymoule, 72550 Coulans sur Gee (FR)
(72) Inventeur: Cosnet, Gilbert, 72550, DEGRE (FR)
(74) Mandataire: Michelet, Alain

(57) **Abrégé**

Dans l'abreuvoir pour bétail conforme à la présente invention, le dispositif de raccordement (9) comporte un corps (12) en forme générale de croix comprenant deux premières tubulures d'alimentation (13, 14), coaxiales, dont les orifices internes taraudés ont un même diamètre et comportent un filetage de même pas, et deux secondes tubulures d'alimentation (15, 16), coaxiales, dont les orifices internes taraudés ont un même diamètre et comportent un filetage de même pas, lesdits diamètres et/ou lesdits pas de filetage desdites premières et secondes tubulures étant différents ; les axes (18, 19) desdites premières et secondes tubulures s'étendent perpendiculairement l'un à l'autre et dans le même plan (P). Le corps en croix (12) comporte également une tubulure de sortie (17) dont l'axe (20) s'étend perpendiculairement audit plan (P), laquelle tubulure de sortie (17) est équipée d'un écrou (22) monté fou en rotation, apte à venir se visser sur un manchon fileté (8) équipant l'extrémité arrière de la conduite interne (6) dudit corps d'alimentation (5).

Une telle structure autorise un raccordement du corps d'alimentation (5) sur deux types de tubulures d'amenée d'eau différents, choisis parmi ceux les plus fréquemment rencontrés.

## Description

La présente invention concerne un abreuvoir pour le bétail ; elle concerne plus particulièrement un abreuvoir du genre comprenant un bol muni de moyens de fixation sur un support et de moyens d'alimentation en eau, lesquels moyens d'alimentation comprennent un corps définissant une conduite d'alimentation, lequel corps d'alimentation est équipé, au niveau de son extrémité avant, d'un dispositif de manoeuvre (agencé pour être actionné par le bétail) et, au niveau de son extrémité arrière, d'un dispositif de raccordement à une tubulure d'amenée d'eau.

Une telle structure d'abreuvoir est par exemple décrite dans les documents FR-2 691 876 et FR-2 774 552.
Dans le document FR-2 774 552, le dispositif de raccordement est prévu en forme générale de Té avec deux tubes d'alimentation disposés dans le prolongement l'un de l'autre et avec un tube de sortie connecté au niveau de l'extrémité arrière du corps d'alimentation.
Les deux tubes d'alimentation coaxiaux ont le même diamètre. S'ils sont disposés horizontalement, ils permettent par exemple d'alimenter en série une pluralité d'abreuvoirs. Pour une tubulure d'amenée d'eau ménagée verticalement, provenant du haut ou du bas, les deux tubes d'alimentation du raccord en Té sont disposés verticalement. Si l'un seul des deux tubes est nécessaire, l'autre est obturé par un bouchon.

Mais les tubulures d'amenée d'eau des installations de ce genre, dans les étables ou les enceintes de stabulation libre, par exemple, sont très généralement équipées d'embouts/raccords de type filetage gaz soit G1/2, soit G3/4.

Par conséquent, pour couvrir les différentes possibilités, il est nécessaire soit de prévoir des références d'abreuvoirs pour les deux types de diamètres, soit de vendre en option des adaptateurs G1/2 - G3/4 et/ou G3/4 - G1/2.

La présente invention a pour but de remédier à cet inconvénient en proposant un abreuvoir équipé d'un dispositif de raccordement unique, apte à venir se connecter sur les deux types d'embouts correspondants des tubulures d'amenée d'eau.

Pour cela, l'abreuvoir conforme à l'invention est caractérisé par le fait que son dispositif de raccordement comporte un corps en forme générale de croix comprenant deux premières tubulures d'alimentation, coaxiales, dont les orifices internes taraudés ont un même diamètre A et comportent un filetage de même pas B, et deux secondes tubulures d'alimentation, coaxiales, dont les orifices internes taraudés ont un même diamètre C et comportent un filetage de même pas D, lesdits diamètres A et C et/ou lesdits pas de filetage B et D étant différents, les axes desdites premières et secondes tubulures s'étendant perpendiculairement l'un à l'autre et dans le même plan P ; ledit corps en croix comporte également une tubulure de sortie dont l'axe s'étend perpendiculairement audit plan P, laquelle tubulure de sortie est équipée d'un écrou monté fou en rotation, apte à venir se visser sur un manchon fileté équipant l'extrémité arrière de la conduite interne du corps des moyens d'alimentation.
Par exemple, les orifices internes taraudés des premières tubulures d'alimentation sont de type filetage gaz G1/2, et les orifices taraudés des secondes tubulures d'alimentation sont de type filetage gaz G3/4.

La personne chargée de monter l'abreuvoir peut ainsi utiliser la ou les premières ou la ou les secondes tubulures d'alimentation, pour le raccordement à la tubulure d'amenée d'eau, en fonction des caractéristiques de cette dernière, les deux ou trois tubulures non utilisées étant fermées par des organes d'obturation adaptés.
L'écrou monté fou en rotation autorise un positionnement angulaire à volonté du corps en croix, en fonction de la configuration d'arrivée de la tubulure d'amenée d'eau.

Pour obtenir le montage fou de l'écrou, la tubulure de sortie du corps en croix comporte avantageusement une collerette d'extrémité en saillie, coopérant avec une collerette interne ménagée sur l'écrou associé.

Les organes d'obturation qui permettent de fermer les tubulures d'alimentation non utilisées du corps en croix sont de préférence en forme de bouchon comprenant un élément de fond circulaire dont le diamètre est supérieur au diamètre de l'orifice interne de la tubulure associée, lequel élément de fond se prolonge par une jupe cylindrique destinée à pénétrer dans ledit orifice interne de tubulure, la face externe de cette jupe étant équipée d'un filetage destiné à coopérer avec le filetage dudit orifice taraudé associé, et lequel bouchon est associé à un joint annulaire d'étanchéité rapporté, positionné autour de ladite jupe, destiné à être pris en sandwich entre ledit élément de fond de bouchon et l'extrémité de ladite tubulure d'alimentation associée.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue en perspective d'un abreuvoir conforme à l'invention avec son bol équipé des moyens d'alimentation en eau ;
- la figure 2 est une vue en coupe longitudinale des moyens d'alimentation en eau, sans le bol d'abreuvoir ;
- la figure 3 est une vue éclatée des moyens d'alimentation en eau illustrés figure 2, sans la palette d'extrémité ;
- la figure 4 est une vue de face du dispositif de raccordement isolé ;
- la figure 5 est une vue de dessus du dispositif de raccordement de la figure 4 ;
- la figure 6 est une vue en coupe selon 6-6 de la figure 5.

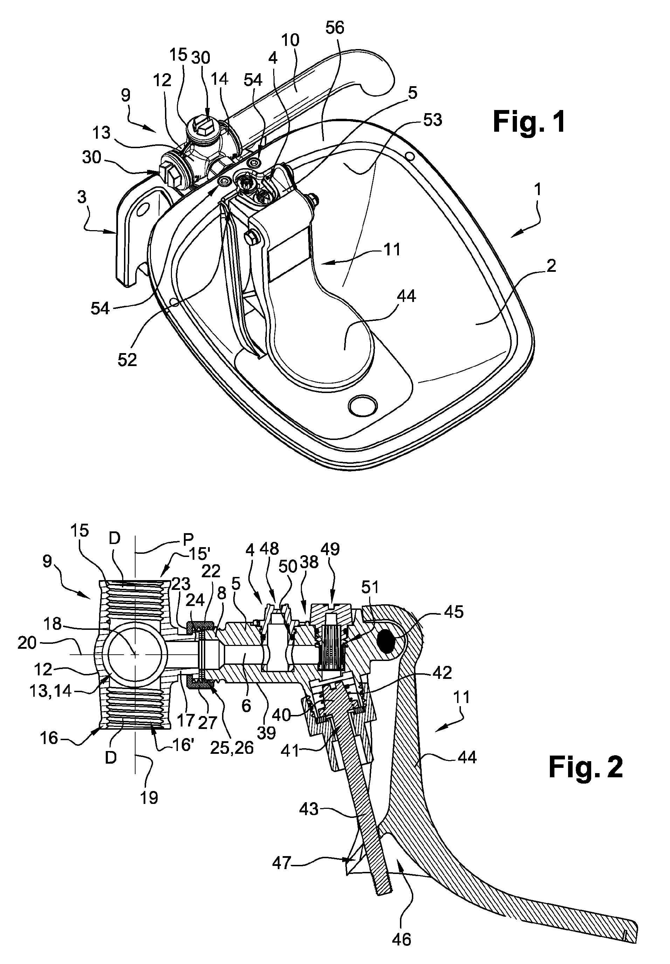

L'abreuvoir 1 illustré sur la figure 1 comprend un bol 2 réalisé en fonte ou en matière plastique moulée, muni de moyens monobloc 3 pour sa fixation sur un support, par exemple un mur, et de moyens 4 pour son alimentation en eau.

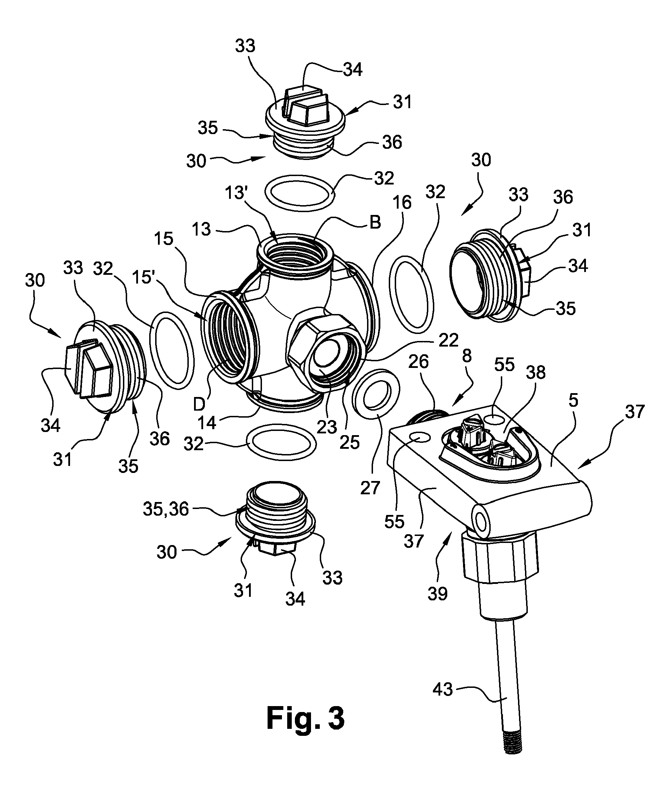

Ces moyens 4 pour l'alimentation en eau sont détaillés sur les figures 2 et 3. Ils comprennent un corps d'alimentation 5 définissant une conduite 6 d'alimentation en eau équipée, en amont, c'est-à-dire du côté de son extrémité arrière, d'un manchon fileté 8 sur lequel vient se visser un dispositif 9 pour le raccordement à une tubulure d'amenée d'eau 10 et, en aval, c'est-à-dire du côté de son extrémité avant, d'un dispositif de manoeuvre 11.

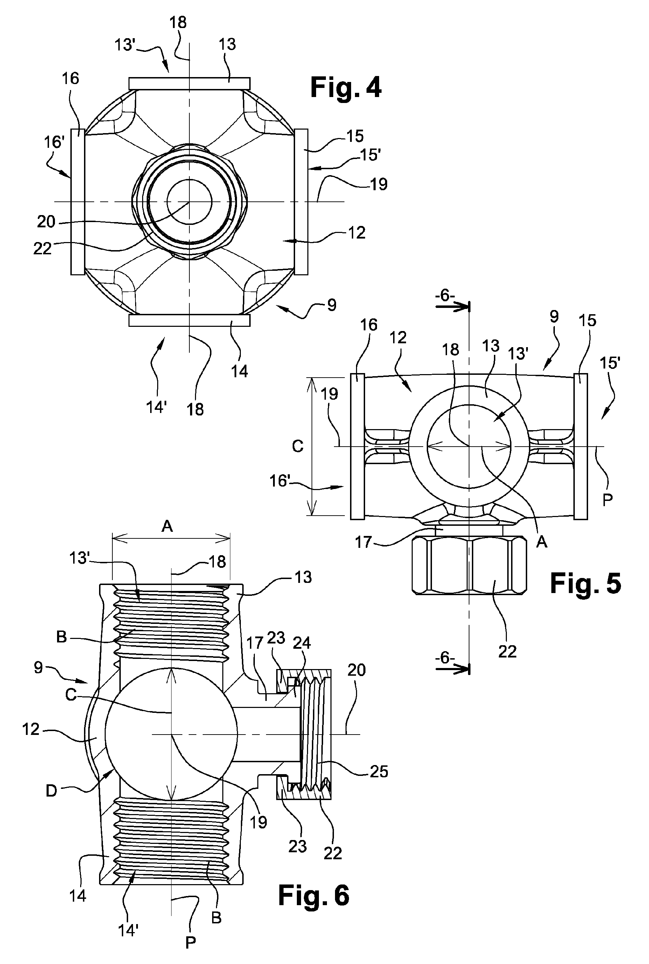

Le dispositif de raccordement 9, détaillé sur les figures 4 à 6, comprend un corps 12 en forme générale de croix qui comporte quatre tubulures d'alimentation 13, 14, 15 et 16 et une tubulure de sortie 17. Ces cinq tubulures 13, 14, 15, 16 et 17 définissent des conduites internes qui sont raccordées ensemble.

Les orifices internes 13', 14', 15' et 16' des tubulures d'alimentation 13, 14, 15 et 16 sont taraudés pour recevoir un embout fileté équipant la tubulure d'amenée d'eau 10 de l'installation.

Parmi les quatre tubulures d'alimentation, deux d'entre elles 13 et 14 sont coaxiales et ont un même diamètre interne A, ainsi qu'un filetage B de même pas ; il s'agit de préférence d'un filetage gaz de type G1/2, anciennement dénommé 15/21 (c'est-à-dire de diamètre nominal 1/2 pouce, avec un pas de 1,814 et ayant 14 filets au pouce).
Les deux autres tubulures 15 et 16 sont également coaxiales et elles ont un même diamètre C, différent de A, ainsi qu'un filetage D de même pas ; il s'agit de préférence d'un filetage gaz de type G3/4, anciennement dénommé 20/27 (c'est-à-dire de diamètre nominal 3/4 de pouce, avec un pas de 1,814 et ayant 14 filets au pouce).

L'axe 18 des premières tubulures 13, 14 est perpendiculaire à l'axe 19 des secondes tubulures 15, 16 et ces deux axes 18 et 19 s'étendent dans le même plan P.

La tubulure de sortie 17 s'étend à partir du centre du corps en croix 12 et son axe 20 s'étend perpendiculairement au plan P. Cette tubulure 17 est associée à un écrou 22, monté fou en rotation. Cet écrou 22 est maintenu sur le corps en croix 12 au moyen d'une collerette interne 23 qui coopère avec une collerette saillante 24 ménagée à l'extrémité de ladite tubulure 17.

Le filetage interne 25 de l'écrou 22 coopère avec le filetage externe 26 du manchon 8 pour monter le dispositif de raccordement 9 sur le corps d'alimentation 5, afin de mettre en communication les tubulures d'alimentation 13, 14, 15 et 16 avec la conduite interne 6.
L'étanchéité de ce montage est obtenue au moyen d'un joint annulaire 27.

Le corps en croix 12 peut être une pièce moulée ou matricée réalisée en laiton, aluminium ou inox ; l'écrou associé 22 peut être réalisé dans les mêmes matières.
Cet écrou 22 peut être monté sur la tubulure de sortie 17 par une opération de sertissage après fabrication, ou par l'ajout d'une pièce supplémentaire à collerette et filetée venant alors se visser dans la tubulure 17 préalablement taraudée.

Un tel raccord en croix 9 autorise un raccordement du corps d'alimentation 5 avec la tubulure d'amenée d'eau 10 selon au moins quatre directions (haut, bas, droite et gauche), le raccordement en question pouvant être réalisé sur deux types d'embouts de tubulures d'amenée différents (en particulier type filetage G1/2 et G3/4).

Selon le cas, la tubulure d'amenée d'eau peut aussi être raccordée directement sur le manchon fileté 8 du corps d'alimentation 5, après enlèvement du dispositif de raccordement 9.

Les orifices des tubulures d'alimentation 13, 14, 15 et 16 qui ne sont pas utilisés sont fermés par des organes d'obturation adaptés, tel que représenté sur la figure 3.

Chaque organe d'obturation 30 est constitué d'un bouchon en matière plastique 31 et d'un joint annulaire 32.
Le bouchon 30 comprend un élément de fond circulaire 33 dont le diamètre est supérieur au diamètre de l'orifice interne 13', 14', 15' et 16' de la tubulure associée 13, 14, 15 ou 16 ; l'une des faces de cet élément de fond comporte une empreinte 34 pour sa manoeuvre et son autre face se prolonge par une jupe cylindrique 35 destinée à pénétrer dans l'orifice de la tubulure d'alimentation associée. Cette jupe 35 est équipée d'un filetage externe 36 de type filetage gaz G1/2 ou G3/4, selon le cas.

Le joint annulaire 32 associé au bouchon 31 est positionné autour de la jupe 35, pour être pris en sandwich entre l'élément de fond 33 et l'extrémité de la tubulure d'alimentation 13, 14, 15 ou 16 associée.
Deux dimensions d'organes d'obturation 30 sont prévues, du fait des deux types de tubulures d'alimentation 13, 14, 15, 16 en présence. En pratique, lors de la livraison, les quatre tubulures 13, 14, 15 et 16 du corps en croix 12 sont équipées chacune de leur organe d'obturation 30.

On obtient donc un mécanisme polyvalent, apte à être monté sur une installation équipée de l'un des deux types de tubulures d'amenée d'eau les plus fréquemment rencontrés.

Comme illustré sur les figures 1 à 3, le corps d'alimentation 5 consiste en une pièce allongée, ici de section globalement rectangulaire avec deux faces latérales 37, une face de dessus 38 et une face de dessous 39. Son dispositif de manoeuvre 11 est du type à obturateur mobile 40 coopérant avec un orifice 41, associé à un ressort de rappel 42 et à une tige de commande articulée 43. L'axe de l'orifice 41 associé à l'obturateur mobile 40 s'étend de manière légèrement inclinée vers l'avant par rapport à la perpendiculaire de l'axe de la conduite 6 du corps d'alimentation 5 ; la tige de commande 43 associée à l'obturateur mobile 40 s'étend en saillie vers le bas et de manière inclinée vers l'avant par rapport à la verticale.
Dans le mode de réalisation illustré, cette tige de commande 43 est manoeuvrée par une palette 44 montée articulée autour d'un axe horizontal 45 au niveau de l'extrémité aval du corps d'alimentation 5. La palette articulée 44 se prolonge vers l'arrière par un talon 46 muni d'une réservation 47 dans laquelle vient se loger la tige de commande 43.

On comprend qu'un appui sur la palette 44 entraîne le basculement de la tige de commande 43 et l'ouverture de l'obturateur mobile 40 qui assure alors l'alimentation en eau du bol d'abreuvoir 2.

A noter que la palette 44 peut être remplacée par un tube entourant la tige articulée 43.

D'autre part, comme on peut le voir sur la figure 2, entre le manchon fileté 8 et le dispositif de manoeuvre 11, le corps d'alimentation 5 comporte un dispositif de réglage de débit 48 et un organe de filtration 49.

Le dispositif de réglage de débit 48, placé entre le manchon 8 et l'organe de filtration 49 consiste en une pièce démontable, logée dans un orifice 50 ménagé à partir de la face de dessus 38 du corps d'alimentation 5 et qui débouche dans sa conduite interne 6. Ce dispositif 48 est réglable en rotation entre deux positions de fin de course : l'une de débit maximum et l'autre de fermeture de débit.

L'organe de filtration 49 est placé entre le dispositif de réglage de débit 48 et le dispositif de manoeuvre 11. Il est structuré pour retenir les éventuelles particules indésirables contenues dans l'eau. Cet organe de filtration 49 consiste en une pièce démontable logée dans un orifice 51 ménagé à partir de la face de dessus 38 du corps d'alimentation 5 et qui débouche dans sa conduite interne 6. Dans le mode de réalisation illustré, l'orifice 51 de réception de l'organe de filtration 49 s'étend coaxialement ou sensiblement coaxialement à l'orifice 41 associé à l'obturateur mobile 40, et perpendiculairement à l'axe de la conduite interne 6.

Le corps d'alimentation 5 est positionné dans un orifice 52 ménagé dans la paroi arrière 53 du bol d'abreuvoir 2. Il est solidarisé avec ce dernier au moyen de deux vis 54 qui viennent se loger dans des orifices 55 ménagés dans la face de dessus 38 du corps d'alimentation 5, en passant par des lumières en correspondance (non visibles), réalisées dans le bol d'abreuvoir 2, entre la bordure supérieure 56 de ce dernier et la face supérieure de l'orifice de passage 52.
Le dispositif de raccordement 9 est monté à l'arrière du corps d'alimentation 5 après que ce dernier ait été positionné dans l'orifice 52 du bol d'abreuvoir 2.
L'ensemble du mécanisme d'alimentation 4 peut être déposé ou remonté alors que le bol 2 reste fixé sur son support.

## Revendications

1. Abreuvoir pour bétail, comprenant un bol (2) muni de moyens de fixation (3) sur un support et de moyens (4) pour assurer son alimentation en eau, lesquels moyens d'alimentation en eau (4) comprennent un corps (5) définissant une conduite interne d'alimentation (6), lequel corps d'alimentation (5) est équipé au niveau de son extrémité avant d'un dispositif de manoeuvre (11) et au niveau de son extrémité arrière d'un dispositif (9) de raccordement à une tubulure d'amenée d'eau (10), **caractérisé en ce que** ledit dispositif de raccordement (9) comporte un corps (12) en forme générale de croix comprenant deux premières tubulures d'alimentation (13, 14), coaxiales, dont les orifices internes taraudés (13', 14') ont un même diamètre (A) et comportent un filetage (B) de même pas, et deux secondes tubulures d'alimentation (15, 16), coaxiales, dont les orifices internes taraudés (15', 16') ont un même diamètre (C) et comportent un filetage de même pas (D), lesdits diamètres (A) et (C), et/ou lesdits pas de filetage (B) et (D) étant différents, les axes (18, 19) desdites première et seconde tubulures (13, 14, 15, 16) s'étendant perpendiculairement l'un à l'autre et dans le même plan (P), ledit corps en croix (12) comportant également une tubulure de sortie (17) dont l'axe (20) s'étend perpendiculairement audit plan (P) des axes (18, 19) desdites tubulures d'alimentation (13, 14, 15, 16), laquelle tubulure de sortie (17) est équipée d'un écrou (22) monté fou en rotation, apte à venir se visser sur un manchon fileté (8) équipant l'extrémité arrière de ladite conduite interne (6) dudit corps d'alimentation (5).

2. Abreuvoir selon la revendication 1, **caractérisé en ce que** la tubulure de sortie (17) du corps en croix (12) comporte une collerette d'extrémité (24) en saillie, coopérant avec une collerette interne (23) ménagée sur l'écrou associé (22), pour obtenir le montage fou dudit écrou (22).

3. Abreuvoir selon l'une quelconque des revendications 1 ou 2, **caractérisé en ce que** les orifices taraudés (13', 14') desdites premières tubulures d'alimentation (13, 14) sont de type filetage gaz G1/2 et **en ce que** les orifices internes taraudés (15', 16') desdites secondes tubulures d'alimentation (15, 16) sont de type filetage gaz G3/4.

4. Abreuvoir selon l'une quelconque des revendications 1 à 3, **caractérisé en ce qu'**il comporte des organes d'obturation (30) pour les tubulures d'alimentation (13, 14, 15, 16) non raccordées à la tubulure d'amenée d'eau (10), lesquels organes d'obturation (30) sont en forme de bouchons (31) comprenant un élément de fond circulaire (33) dont le diamètre est supérieur au diamètre de l'orifice interne (13', 14', 15', 16') de la tubulure associée (13, 14, 15, 16), lequel élément de fond (33) se prolonge par une jupe cylindrique (35) destinée à pénétrer dans ledit orifice interne (13', 14', 15', 16') de ladite tubulure d'alimentation associée (13, 14, 15, 16), la face externe de ladite jupe (35) étant équipée d'un filetage (36) destiné à coopérer avec le filetage (B, D) dudit orifice taraudé associé, et lequel bouchon (31) est associé à un joint annulaire d'étanchéité rapporté (32), positionné autour de ladite jupe (35), destiné à être pris en sandwich entre ledit élément de fond (33) du bouchon (31) et l'extrémité de ladite tubulure d'alimentation associée (13, 14, 15, 16).
